# EUROPEAN PATENT SPECIFICATION

(11) **EP 2 621 211 B1**
(45) Date of publication and mention of the grant of the patent: **02.04.2014**
(21) Application number: 12290033.5
(22) Date of filing: 27.01.2012
(51) Int. Cl.: H04W 24/02, H04W 16/22, H04W 72/12, H04L 12/24

(54) **Method for determining cell configuration parameters in a wireless telecommunication network**
Verfahren zur Bestimmung der Zellkonfigurationsparameter in einem drahtlosen Telekommunikationsnetzwerk
Procédé pour déterminer les paramètres de configuration de cellule dans un réseau de télécommunication sans fil

(43) Date of publication of application: 31.07.2013
(73) Proprietor: Alcatel Lucent, 75007 Paris (FR)
(72) Inventor: Karla, Ingo, 46514 Schermbeck (DE)
(74) Representative: Wetzel, Emmanuelle

(56) References cited:
- US-B1- 7 774 440
- ZWI ALTMAN: "Design and evaluation of self-optimisationalgorithms for radio access networks", INTERNET CITATION, 9 June 2009 (2009-06-09), pages 1-24, XP002670463, Retrieved from the Internet: URL:http://www.fp7-socrates.org/files/Work shop1/SOCRATES%20workshop%20Santander_Zwi% 20Altman.pdf [retrieved on 2012-02-28]
- ECKARD BOGENFELD ET AL: "Self-x in Radio Access Networks", INTERNET CITATION, 22 December 2008 (2008-12-22), pages 1-24, XP002670465, Retrieved from the Internet: URL:https://ict-e3.eu/project/white_papers /Self-x_WhitePaper_Final_v1.0.pdf [retrieved on 2012-02-28]
- PREMNATH K N ET AL: "Challenges in self organizing networks for wireless telecommunications", RECENT TRENDS IN INFORMATION TECHNOLOGY (ICRTIT), 2011 INTERNATIONAL CONFERENCE ON, IEEE, 3 June 2011 (2011-06-03), pages 1331-1334, XP032004576, DOI: 10.1109/ICRTIT.2011.5972332 ISBN: 978-1-4577-0588-5

## Description

The invention relates to the field of mobile telecommunication, more particularly to determining cell configuration parameters for the telecommunication network.

### Background and related art

Wireless telecommunication in digital cellular wireless telecommunication networks is performed based on cell configuration parameters. The cell configuration parameters define the network conditions for each cell. The cell configuration parameters may be different for each cell. Optimizing the cell configuration parameters can increase traffic throughput, and the quality of service. Interferences may be reduced by optimizing the cell configuration parameters.

US 7774 440 B1 discloses a method to execute a plurality of simulations for the network using discrete event simulation in order to determine an optimal network configuration.

Zwi Altman, "Design and evaluation of self-optimisation algorithms for radio access networks", internet citation URL: http://www.fp7-socrates.org/files/Workshop1/SOCRATES%20workshop%20Santander_Zwi%20Alt man.pdf, discloses self-optimizing algorithms for radio access networks.

### Summary

It is an object of the present invention to provide an improved method for determining at least one candidate set of cell configuration parameters, an improved network entity of a digital cellular wireless telecommunication network, and an improved computer program product according to the independent claims. Embodiments of the invention are given in the dependent claims.

The invention relates to a method for determining at least one candidate set of cell configuration parameters for at least one cell in a digital cellular wireless telecommunication network. The method comprises determining current network conditions. The current network conditions comprise for example an energy consumption for at least one base station of the at least one cell, a quality of service indicator indicating the quality of service experienced by mobile entities being located inside the at least one cell, and/or interferences occurring in the at least one cell. It is to be noted that a base station may serve only one cell or several cells. A cell may also be referred to as a sector.

A current set of cell configuration parameters is determined according to embodiments of the invention. Determining the current set of cell configuration parameters may be performed by measurements, retrieved from a database or received from the at least one base station. The cell configuration parameters may comprise for example handover parameters, transmission times, transmission frequencies, transmission powers, and/or antenna parameters. The transmission times and transmission frequencies may also be referred to as resource blocks. A resource block consists of a frequency range that is used for wireless data transmissions for a certain time period. The transmission power defines the cell size. The higher the transmission power is the bigger the cell size is. Handover related parameters may for example be handover thresholds and/or time periods being related with the handover process. Antenna parameters may for example be a radiation direction and/or an antenna tilt.

Previously acquired information are retrieved. The previously acquired information indicate impacts on the network conditions when the cell configuration parameters are varied. The previously acquired information may be stored in a database. The database may for example be located in a storage medium inside the network entity performing the method according to embodiments of the invention. Alternatively the database can be located in a network entity external to the network entity performing the method. The previously acquired information is information that has been acquired by the network entity performing the method and/or by base stations of the at least one cell. The previously acquired information may for example indicate the interferences, the quality of service, and/or the energy consumption for certain cell configuration parameters. The previously acquired information has for example been acquired when other cell configuration parameters have been used for wireless telecommunication in the at least one cell. For example the current set of cell configuration parameters comprises the parameters A, B, C and D. The previously acquired information indicates impacts on the network conditions when the cell configuration parameter A is changed into E, B is changed into F, C is changed into G, and/or D is changed into H.

The at least one candidate set of cell configuration parameters is determined by varying the current set of cell configuration parameters based on the current network conditions and the previously acquired information. Each candidate set is adapted for replacing the current set. Varying the current set herein means that the current set is used as a starting point for determining the at least one candidate set. In other words, the candidate set is not determined by starting from 0. The current set is used as a starting point for determining the at least one candidate set.

The at least one candidate set is determined based on the current network conditions and the previously acquired information. For example the current network conditions cause high interferences in the at least one cell. In this case the network entity performing the method according to embodiments of the invention varies the current set of cell configuration parameters in order to decrease interferences. Therefore the previously acquired information are used. For example by using the previously acquired information the network entity has information that the interferences can be reduced by replacing parameter A by parameter B.

According to embodiments of the invention determining the at least one candidate set comprises estimating a change of a cell load of the at least one cell. The change of the cell load is correlated with a change of the cell size of the respective cell. The correlation between the change of the cell load and the change of the cell size is determined based on the previously acquired information. This is advantageous for estimating how the cell load will change if the cell size is increased or decreased. The cell size is increased when the transmission power of the base station of the cell is increased and the cell size is decreased when the transmission power of the base station is decreased. The previously acquired information may indicate how a change of the cell size is correlated with the change of the cell load. This correlation has not necessarily to be linear. For example the cell size is increased by a region A and the mobile entities being located in this region A generate more data traffic than the average, increasing the cell size by this region A increases the traffic load of the respective cell more than increasing the cell size by a second region B, wherein the regions A and B have the same size and may also have the same number or an equivalent number of mobile entities being located in the respective region. In this case the previously acquired information indicate that increasing the at least one cell by the region A increases the cell load more than increasing the cell size of the at least one cell by the region B although region A and B have the same size.

According to embodiments of the invention a linear correlation between the change of the cell load and the change of the cell size is assumed, if the previously acquired information is not sufficient for determining the correlation between the change of the cell load and the change of the cell size. The previously acquired information may for example not be sufficient if such a change of the cell size has not yet been performed. It may be indicated in the previously acquired information that it is not sufficient for determining the correlation. For example the previously acquired information is only considered as sufficient when there is enough statistical data. The determination if the previously acquired information is sufficient may be performed by the network entity. Alternatively a flag is set for the previously acquired information. The flag indicates if the previously acquired information is sufficient or not. The flag may be set by the network entity and/or by a base station.

According to embodiments of the invention the method further comprises simulating simulated network conditions for each candidate set for the at least one cell based on the previously acquired information. Simulation may for example be performed by a simulation algorithm. In other words, when the simulation is performed, offline calculations are performed.The simulation algorithm simulates the network conditions for each candidate set without using the candidate set for wireless telecommunication in the at least one cell. The simulation algorithm may for example use the previously acquired information for cell configuration. Additionally or alternatively the simulation algorithm may adjust itself by using the previously acquired information. Additionally or alternatively the simulation algorithm simulates the network conditions by using at least one variable. In this case the previously acquired information is used for determining the value of the variable.

The simulated network conditions are compared and it is determined which candidate set of the at least one candidate set is the best set by using the results of the comparison. For example the simulated network conditions are compared with respect to interferences, quality of service, and/or energy consumption. Each of these factors may be weighted. For example the quality of service is more important than the energy consumption. The best candidate set is then used for telecommunication in the at least one cell.

For determining the best candidate set the various factors that are considered for determining the simulation results, such as the quality of service, the data throughput and/or the are taken into account with different or the same weighting factors. For example the quality of service is weighted very high as well as the data throughput. The energy consumption may be weighted not as high as the both previously mentioned indicators. The best candidate set is understood herein as the candidate set that optimizes the network conditions in the plurality of cells. Optimizing the network conditions comprises improving energy consumption, and/or quality of service, and/or data throughput, and/or interference conditions.

For example the best candidate set optimizes network conditions in the telecommunication network the most in comparison with the other candidate sets. Indicators of how good network conditions are may for example be the quality of service, interferences, energy consumption. The energy consumption is an indicator for the energy consumed by the base stations of the telecommunication network for transmitting and processing data. A base station is understood herein as a network entity serving at least one cell. However, a base station may also serve a plurality of cells. A cell may also be referred to as a sector.

The best candidate set is then preferably used for wireless telecommunication in the at least one cell as a new set of cell configuration parameters. The new set of cell configuration parameters may also be referred to as the replacement set of cell configuration parameters. The replacement set of cell configuration parameters is used in the plurality of cells for data transmissions.

The current set may also be referred to as a first set, while the best set may be referred to as a second set, and the new set may be referred to as a third set.

According to embodiments of the invention an actual change of the cell load is determined after using the best candidate set for telecommunication. The actual change of the cell load is compared with the simulated change of the cell load. The previously acquired information is updated if the simulated change of the cell load differs from the actual change of the cell load by more than a threshold value. This determination is advantageous for correcting the previously acquired information. If the simulated change differs from the actual change the previously acquired information has not been exact. Hence the previously acquired information becomes more exact after updating it.

Further an actual change of a quality of service is determined after using the best candidate set for telecommunication. The actual change of the quality of service is compared with a simulated change of the quality of service. The previously acquired information is updated, if the simulated change of the quality of service differs from the actual change of the quality of service by more than a quality threshold value. Updating the previously acquired information is again advantageous because obviously the simulated change of the quality of service was not right and the previously acquired information needs to be updated in order to make the previously acquired information more realistic.

Further, an actual change of an energy amount is determined after using the best candidate set for telecommunication. The actual change of the energy amount is compared with a simulated change of the energy amount. The previously acquired information is updated if the simulated change of the energy amount differs from the actual change of the energy amount by more than an energy threshold value. Again this is advantageous for avoiding not sufficiently accurate simulations.

An actual change of a resource efficiency is determined after using the best candidate set for telecommunication. The actual change of the resource efficiency is compared with a simulated change of the resource efficiency. The previously acquired information is updated if the simulated change of the resource efficiency differs from the actual change of the resource efficiency by more than a resource efficiency value.

According to embodiments of the invention virtual current network conditions are simulated based on the current set of cell configuration parameters using a simulation algorithm. The simulation algorithm is the same that is used for simulating the network conditions for the at least one candidate set. The simulation results of the virtual current network conditions are compared with the current network conditions. The simulation algorithm is adjusted if the simulation results of the virtual network conditions differ from the current network conditions by more than a simulation threshold. In other words, the current network conditions are simulated by using the simulation algorithm. However, the current network conditions are already known because they can be measured or are already stored in the network entity. The simulation results are compared with the real values and if there are too big differences it is determined that the simulation algorithm does not work properly. In this case the simulation algorithm is adjusted such that the simulation results do not differ so much from the real network conditions. Preferably the simulation algorithm is adjusted such that the simulated current network conditions are equal to the current network conditions. This may for example be performed with respect to the resource efficiency.

According to embodiments of the invention simulating the virtual current network conditions comprises simulating the traffic throughput, the quality of service, and/or the energy amount. The traffic throughput is simulated by a traffic throughput simulation algorithm. The quality of service is simulated by a quality simulation algorithm. The energy amount is simulated by an energy consumption algorithm. The traffic throughput simulation algorithm is adjusted if the simulation results of the traffic throughput differ from a current traffic throughput. The quality simulation algorithm is adjusted if the simulation results of the quality of service differ from a current quality of service. The energy consumption algorithm is adjusted if the simulation results of the energy amount differ from a current energy amount. It is to be noted that the current energy amount, the current quality of service, and the current traffic throughput are comprised by the current network conditions. The quality of service is an indicator for the quality of service experienced by a user being located in the at least one cell.

According to embodiments of the invention it is determined whether the simulated network conditions comply with allowed network conditions. The simulation algorithm is adjusted if the simulated network conditions do not comply with the allowed network conditions. For example the simulation may have a result that is not allowed in the network. This may for example be the case if a certain indicator lies outside an allowed region. For example two values have to be the same value according to network policies. If the simulation result is that these two values are not equal the simulation algorithm needs to be adjusted because this is not allowed in the network.

According to embodiments of the invention the method further comprises determining an amount of energy consumed by the plurality of cells when using the best candidate set, and/or determining a service quality level for the plurality of cells when using the best candidate set, and/or determining a traffic throughput for the plurality of cells when using the best candidate set. The amount of energy is normalized against a maximum consumption energy amount, the service quality is normalized against a maximum service quality level, and/or the traffic throughput is normalized against a maximum possible traffic throughput. When calculating a predicted system performance, than the predicted values correspond to the concrete situation, e.g. to the offered traffic load. This leads to that in different scenarios and different cells within a cellular network, the performance prediction would come up with highly varying numerical values. However, the strategy of the network operator is typically represented by generic aims, which are independent of particular concrete e.g. data-bit numbers. So, within one algorithm cycle of a self-organizing network (SON), the input values for the metric should be normalized.

For example, the actually occurring energy consumption can be normalized against the maximum possible energy consumption assuming with full power on all possible resources.
For example the actually occurring user Quality Of Service could be normalized against the case that all users would get fully served with completely their requested service.
For example the system throughput could be normalized against the case that all the offered traffic would completely be fully served by the system.
With this normalisation, the metric then becomes system and load independent and the same metrics function does always represent the strategy of the network operator and can be used in a generic way.

According to embodiments of the invention a data transmission efficiency indicator is determined for each candidate set and for each cell of the at least one cell based on the previously acquired information. The data transmission efficiency indicator takes into account interferences and indicates how much data can be transmitted for a frequency range during a time period. The data transmission efficiency indicator is used for determining the best candidate set. For example the data transmission efficiency indicator is used for calculating the highest possible traffic throughput in the cell when applying the respective candidate set. For calculating the traffic throughput for example the data transmission efficiency indicator is multiplied with the resources available for the at least one cell when applying the respective candidate set.

The term "data transmission efficiency" may also be referred to as "resource efficiency".

According to embodiments of the invention the data transmission efficiency indicator is estimated based on the previously acquired information, if the data transmission efficiency indicator is not explicitly comprised by the previously acquired information.

According to embodiments of the invention each candidate set of cell configuration parameters comprises at least one of transmission times, transmission frequencies, transmission powers, handover related parameters, and/or antenna parameters. It is to be noted that the transmission frequencies may be frequency bands, sub-bands or frequency ranges.

According to embodiments of the invention the previously acquired information is retrieved from a database and/or a measurement, and/or received from the at least one base station of the at least one cell.

In another aspect the invention relates to a network entity of a digital cellular wireless telecommunication network. The network entity comprises means for determining current network conditions, means for determining a current set of cell configuration parameters, and means for retrieving previously acquired information. The previously acquired information indicates impacts on the network conditions when the cell configuration parameters are varied. Further, the network entity comprises means for determining the candidate sets of cell configuration parameters by varying the current set of cell configuration parameters based on the current network conditions and the previously acquired information. Each candidate set is adapted for replacing the current set. For example the network entity may comprise a processor and a storage medium storing program instructions. The processor is adapted for executing the program instructions. The program instructions cause the processor to perform a method according to embodiments of the invention. In other words, the means of the network entity are implemented by the processor.

In yet another aspect the invention relates to a computer program product comprising instructions that when being executed cause a network entity to perform a method according to embodiments of the invention.

This invention provides the concrete self-learning techniques and the concrete realization solutions, which are needed by a self-organizing network (SON) system for cellular wireless networks to adapt itself automatically in a self learning way to the concrete cell-individual situation and cell-individual characteristics, e.g. kind/policy of radio system, cell layout scenario, interference situation, and/or traffic load.

In very diverse scenarios (many het-net situations, light radio, highly coupled effects and parameters, ...), self learning techniques are the only way to handle the large complexity, to allow cell individual configurations + optimizations and to ensure that the SON system is ensured to be stable + robust.

The combined SON + self-learning solution then provides a generic SON solution, which handles simultaneous optimizations of coupled interacting effects in a generic way. The generic SON + self-learning system adapts itself to the particular cell individual situation and ensures to optimize according to the operator policies.

As one concrete example, embodiments of the invention provide the techniques, how small metro basestations can adapt themselves automatically and self-learningly in an advantageous way to the external situation of an existing macro cell network of another vendor.

The following description explains embodiments of the invention in a more detailed way.

### 1) Work with deviations from the current state - instead of calculations from the beginning.

Instead of starting prediction the values from zero, from an empty system, the SON + self-learning system takes the current situation as a starting point and then applies variations to the current state. This then limits the potential mismatch of the prediction model to the in reality occurring situation after this parameter set would have been installed.

Example for the case of virtual traffic shift in the prediction model: When shifting the cell border, then there is a traffic shift between the involved cells. The new traffic per cell is then calculated based on the current traffic load value plus or minus the traffic shift.

### 2) Adapt (limit) algorithm step size according to the expected imperfection of the prediction

Within the distributed SON solution procedure, there is an algorithm which evaluates a variety of possible candidate parameter combinations. With perfect prediction it would be possible to search the full theoretically possible parameter space within one step. However it may be required to restrict the parameter variation to a certain maximum value in order to ensure that the simplified prediction model is still pretty accurate.

Example for traffic shift: It could be advised to limit the virtual shift of the cell border to a few dB only and not to allow e.g. a 15 dB shift of the cell size within one singe step.
Iterative algorithm techniques will then step by step further shift the cell border if needed.

### 3) Adaptation of traffic shift prediction function:

As the starting point, at first the traffic shift is assumed to be linear to the amount of traffic in the cell border area of the shrinking cell. This is a good starting point and is already working.

However in the case that no detailed information about the traffic distribution within the cells are available, then it will become highly beneficial to let the system learn a scaling factor for the traffic shift via feedback of the result. This feedback does then also allow to learn the typical traffic distribution within the unknown other cell.
After the SON algorithm has chosen and installed a particular set of new configuration parameters, then the self-learning functionality compares the previously predicted traffic shift with the actually occurring one in order to tune the traffic shift prediction function e.g. via a scaling factor. There are (or can be) individual self-learning traffic scaling factors for each cell towards each of its direct neighbouring cells.

### 4) Self-learning of the generic "Resource Efficiencies"

The Resource efficiencies represent how well a particular resource (e.g. Frequency part, Physical Resource Block, etc.) is able to provide e.g. data at a particular location and under the occurring interference situation. This generic representation is capable to describe the behaviour of different types of mobile networks, and for the particular cell individual situation.

However, there is the challenge to set the key parameter for the values of the resource efficiencies. Due to the diversity of the possible scenarios and variety of occurring situations, the only way is to use Self-X techniques to let the system set these key parameters itself.

In this concrete embodiment this includes mandatorily the following steps:
a) The cell collects information about the current state, i.e. as far as possible how well -under the current resource usage, distribution and cell sized- the existing resources are able to serve the users - averaged over the time period as used within the underplaying distributed SON technique.
b) It shall be noted, that possibly or usually not all of the individual resource efficiencies can be determined (measured) from the system, e.g. because that kind of resource + interference situation was not used and thus no measurement data are available.
   In this case, these non-measured resource efficiencies are assumed to be approximated based on other -available- measurement values. This can i.e. be by taking values from a larger area (such as the whole cell) and/or by assuming that there is a certain (default-value) performance difference between interference-free and interference-suffering resources.
c) Self-Calibration of resource efficiencies:
   Before the SON algorithm is evaluating new candidate parameter sets, there is a calibration of the resource efficiencies used in the generic virtual scheduler model. A virtual scheduler is run for the currently active parameter set, using the initially measured resource efficiencies and then the virtual scheduler calculates resource wishes for the just now present situation. The resulting predicted cell performance of the virtual scheduler is then compared to the actual situation in the cell and simulation studies have shown that there is typically a certain mismatch, as the simple generic scheduler is not as complex as the real system scheduler and as there are approximation errors. Thus it is now crucial for correct SON operation to calibrate the virtual model to the real system situation. This is done via scaling the virtual resource efficiencies in such a way, that the virtual scheduler then calculates precisely the same system performance as the real system has just shown.

The virtual scheduler is now calibrated to predict perfect results for the currently active parameter set in the currently present situation.

These self-calibrated resource efficiencies are then kept constant during one SON algorithm step when various possible candidate parameter sets are virtually evaluated.

### 5) Self-learning of the general energy modelling performance

The SON algorithm is deciding on the best suited parameter set based on its internal virtual metric to predict, based on the scheduler resource needs/consumptions, the resulting performance and energy consumption for that particular cell. While this virtual metric does not need to create absolute values because it is only used to compare different candidate solutions against each other, the metrics shall nevertheless represent well the major metrics contributions, i.e. the ratio between positive parts (i.e. system performance, user experienced quality of service) and negative parts (i.e. the energy consumption) needs be represented correctly by the metric. Otherwise there is the risk, that the SON model drifts away from the real system by either favouring improving the performance or by minimizing the energy consumption, while in the real system there is a different balance between these two kind of contributions.

Thus, the performance-to-energy ratio of the metric should self-learningly be calibrated to the actually occurring situation. The performance-to-energy ratio of the predicted new parameter set should be compared to the observed one of the real system and then a calibration factor is applied to e.g. the energy part of the metric, to ensure that the metrics to select the best candidate parameter set, represents the performance to energy behaviour of the real cell.

In addition to the above feature, a further issue has been identified for which SON + self learning solutions may be beneficial or are maybe mandatory in certain scenarios.

### 6) Using information from other cells as starting values when there are no data (e.g. empty cell or new cell)

If there are no user data information, especially when a cell is completely empty or when a new cell is just being switched on, then there are no real-world measurement data which allow to start to create a prediction of what would happen when this new cell would get some traffic. In the current implementation, then simply default values are taken and the SON + self-learning system is already working savely and fine. However, it became clear, that in this case, the SON performance is "not optimal" and that there is "room for improvement" as these default starting values may or may not correspond well to the actual system behaviour in that particular case. It would be beneficial to use "experience values" from other - similar- cells as starting point for the parameter configurations of a new or empty cell.

### Brief description of the drawings

- Fig 1: is a schematic view of a wireless digital cellular telecommunication network according to embodiments of the invention,
- Fig. 2: is a schematic view of a wireless digital cellular telecommunication network according to embodiments of the invention,
- Fig. 3: is a flow diagram of a method according to embodiments of the invention, and
- Fig. 4: is a block diagram of a network entity according to embodiments of the invention.

### Detailed description

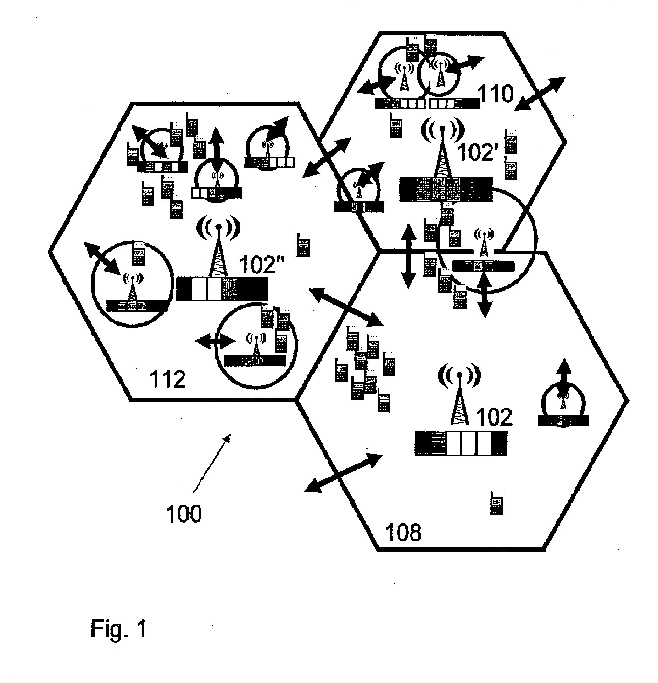

Fig. 1 is a schematic view of a digital cellular wireless telecommunication network 100 comprising a plurality of cells 108, 110 and 112. The cells 108-112 may also be referred to as sectors. Cell 108 is served by base station 102, cell 110 is served by base station 102', and cell 112 is served by base station 102". Although in Fig. 1 each cell is served by one base station it may be the case that one base station serves several cells. Fig. 1 further comprises smaller base stations (without reference sign) that serve cells which lie inside the cells 108, 110 and 112. Each base station 102 uses resource blocks for digital telecommunication with mobile devices. Resource blocks may for example a frequency range that is used for a time period for telecommunication in the respective cell. In Fig. 1 the resource blocks are schematically depicted as blocks below the respective base station 102. For example base station 102 uses three out of six resource blocks. Base station 102 uses the first, the second and the sixth resource block. Base station 102' uses all six resource blocks and base station 102" uses four resource blocks, namely the first and the fourth, the fifth and the sixth. Using the same resource blocks neighboring cells may cause interferences for communication with mobile devices in the region where the two cells overlap. Further interferences may be caused by the smaller base stations that serve cells that lie inside cells 108, 110 and 112. Parameters used for telecommunication in the respective cells are for example the resource blocks, and the transmission power. The transmission power may be used for varying the cell size as indicated by the arrows in Fig. 1. For example when the transmission power of base station 102 is increased the cell size of cell 108 is also increased and interferences between cell 108 and cells 110 and 112 may also become more significant. Another parameter that can be set for each base station 102 are the resource blocks. A resource block is a frequency range and time period that is used for transmitting data inside the cell. When the same frequency range is used at the same time in neighboring cells interferences may happen. By optimizing the parameters described above, interferences may be decreased and telecommunication in the network 100 is made more comfortable for users.

For example the base stations 102, 102' and 102" are adapted to accept parameter changes that are determined by a method according to embodiments of the invention. However, one or more of the smaller base stations that serve the cells that lie inside the cells 108-112 may not be adapted to accept external changes. For example these smaller base stations use parameters that are set manually by an administrator. The parameters used by the smaller base stations are considered for the method according to embodiments of the invention as constraints such as other constraints of the network 100. This is advantageous because the parameters of the base stations 102, 102' and 102" can be optimized by methods according to embodiments of the invention although the smaller base stations cannot be optimized in the same way. Other constraints for the method according to embodiments of the invention can be for example the fact that only certain frequency ranges are allowed to be used for data transmissions in the cells 108-112.

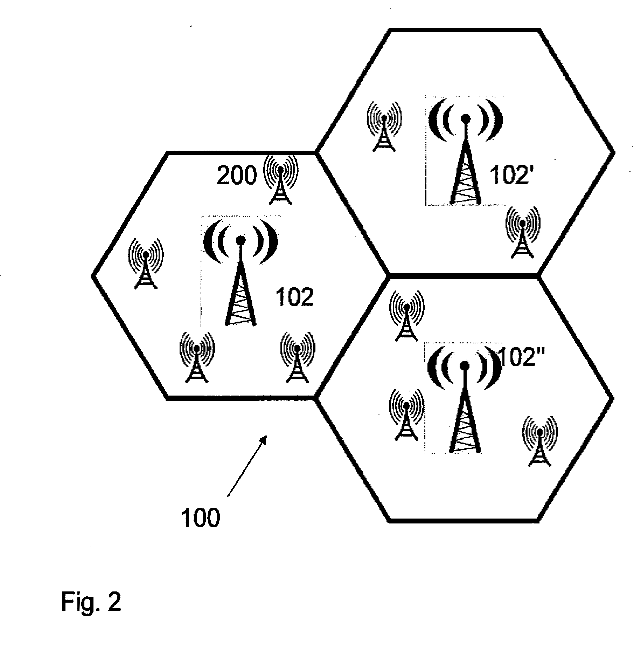

Fig. 2 is a schematic view of a digital cellular wireless telecommunication network comprising a plurality of base stations 102. Each base station 102 serves one cell, which may also be referred to as a sector. In each cell at least one smaller base station 200 is located. The smaller base station 200 can be considered by the method according to embodiments of the invention as constraints. The parameters of the smaller base station 200 may not be changed by the method according to embodiments of the invention. In other words, a network entity according to embodiments of the invention may determine a best set of transmission parameters for base stations 102, 102' and 102", which is then used as a replacement set for wireless telecommunication in the depicted cells. However, the method may not determine replacement parameters for the small base station 200. This is why these parameters are considered as constraints in the sense of the invention. This helps to optimize the parameters of base stations 102, 102' and 102" by considering the unchangeable parameters of the smaller base station 200.

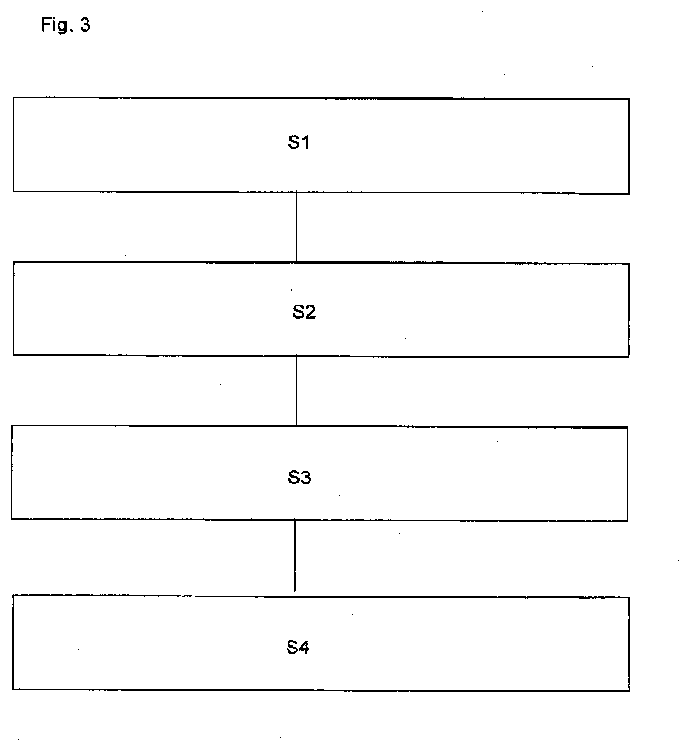

Fig. 3 is a flow diagram of a method according to embodiments of the invention. In a first step S1 current network conditions are determined. The current network conditions may for example be determined by measurements, and/or received from base stations of the plurality of cells, and/or retrieved from a database. The database may for example comprise previously acquired information that is information about the current network conditions.

In a second step S2 a current set of cell configuration parameters is determined. The current set of cell configuration parameters defines for example the cell size, interference conditions, the quality of service, and/or the energy consumption of the at least one base station of the at least one cell. The cell configuration parameters may for example be transmission times, transmission frequencies, transmission powers, handover related parameters, and/or antenna parameters.

In a third step S3 previously acquired information are retrieved. The previously acquired information indicate impacts on the network conditions when the cell configuration parameters are varied. The previously acquired information may for example be information of how interferences, energy consumption, and/or cell sizes vary when certain cell configuration parameters are varied.

In a fourth step S4 the at least one candidate set of cell configuration parameters is determined by varying the current set of cell configuration parameters based on the current network conditions and the previously acquired information. Each candidate set is adapted for replacing the current set. In other words, the at least one candidate set is not determined by starting from any random starting point. As a starting point for determining the at least one candidate set the current set of cell configuration parameters is used. When varying the cell configuration parameters the current network conditions and the previously acquired information are considered. For example when the interferences in a certain cell shall be decreased the transmission power of neighboring cells of this cell is decreased. Other variations would be that different frequency ranges or different transmission times are used for certain cells.

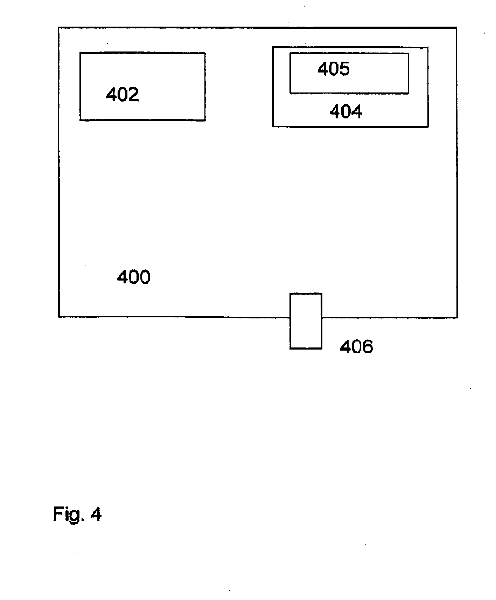

Fig. 4 is a block diagram of a network entity 400 according to embodiments of the invention. The network entity 400 comprises a processor 402, a storage medium 404 storing computer executable program instructions 405 that are adapted to be executed by the processor 402. Further, the network entity 400 comprises an interface 406.

The network entity 400 may exchange information via interface 406 with other network entities and/or base stations. In operation the processor 402 executes the program instructions 404 stored on storage medium 405. When executing the program instructions 405 the processor 402 is caused to perform a method according to embodiments of the invention as described for example with respect to Fig. 3.

### List of reference numerals

- 100: wireless digital cellular telecommunication network
- 102: base station
- 108: cell
- 110: cell
- 112: cell
- 200: base station
- 400: network entity
- 402: processor
- 404: storage medium
- 405: program instructions
- 406: interface

## Claims

1. A method for determining at least one candidate set of cell configuration parameters for at least one cell (108; 110; 112) in a digital cellular wireless telecommunication network (100), wherein the method comprises:
- determining (S1) current network conditions;
- determining (S2) a current set of cell configuration parameters;
- retrieving (S3) previously acquired information, wherein the previously acquired information indicate impacts on the network conditions when the cell configuration parameters are varied;
- varying the current set of cell configuration parameters using the previously acquired information, the variation being further based on the current network conditions, the variation resulting in one or more sets of cell configuration parameters;
- determining (S4) the at least one candidate set of cell configuration parameters from the one or more sets of cell configuration parameters, wherein each candidate set of the one or more sets is adapted for replacing the current set.

2. Method according to claim 1, wherein determining the at least one candidate set comprises estimating a change of a cell load of the at least one cell (108; 110; 112), wherein the change of the cell load is correlated with a change of the cell size of the respective cell, and wherein the correlation between the change of the cell load and the change of the cell size is determined based on the previously acquired information.

3. Method according to claim 2, wherein a linear correlation between the change of the cell load and the change of the cell size is assumed, if the previously acquired information is not sufficient for determining the correlation between the change of the cell load and the change of the cell size.

4. Method according to any one of the preceding claims, wherein the method further comprises the following steps:
- simulating simulated network conditions for each candidate set for the at least one cell (108; 110; 112) based on the previously acquired information;
- comparing the simulated network conditions;
- determining one of the at least one candidate set as the best candidate set by using the results of the comparison; and
- using the best candidate set for telecommunication in the at least one of cell (108; 110; 112).

5. Method according to claim 4, wherein the method further comprises at least one of:
- determining an actual change of the cell throughput after using the best candidate set for telecommunication, wherein the actual change of the cell throughput is compared with a simulated change of the cell throughput, and wherein the previously acquired information is updated, if the simulated change differs from the actual change by more than a threshold value;
- determining an actual change of a quality of service after using the best candidate set for telecommunication, wherein the actual change of the quality of service is compared with a simulated change of the quality of service, and wherein the previously acquired information is updated, if the simulated change of the quality of service differs from the actual change of the quality of service by more than a quality threshold value;
- determining an actual change of an energy amount after using the best candidate set for telecommunication, wherein the actual change of the energy amount is compared with a simulated change of the energy amount, and wherein the previously acquired information is updated, if the simulated change of the energy amount differs from the actual change of the energy amount by more than an energy threshold value.

6. Method according to any one of the claims 4-5 wherein virtual current network conditions are simulated based on the current set of cell configuration parameters using a simulation algorithm, wherein the simulation algorithm is also used for simulating the network conditions for the at least one candidate set, wherein the simulation results of the virtual current network conditions are compared with the current network conditions, and wherein the simulation algorithm is adjusted, if the simulation results of the virtual network conditions differ from the current network conditions by more than a simulation threshold.

7. Method according to claim 6, wherein simulating the virtual current network conditions comprises simulating the traffic load, the quality of service, and/or the energy amount, wherein the traffic load is simulated by a traffic load simulation algorithm, wherein the quality of service is simulated by a quality simulation algorithm, wherein the energy amount is simulated by an energy consumption algorithm, wherein the traffic load simulation algorithm is adjusted, if the simulation results of the traffic load differ from a current traffic load, wherein the quality simulation algorithm is adjusted, if the simulation results of the quality of service differ tom a current quality of service, and wherein the energy consumption algorithm is adjusted, if the simulation results of the energy amount differ from a current energy amount.

8. Method according to any one of the claims 4-7, wherein it is determined whether the simulated network conditions comply with allowed network conditions, wherein the simulation algorithm is adjusted, if the simulated network conditions do not comply with the allowed network conditions.

9. Method according to any one of the preceding claims, wherein the method further comprises at least one of the following steps:
- determining an amount of energy consumed by the plurality of cells when using the best candidate set;
- determining a service quality level for the plurality of cells when using the best candidate set;
- determining a traffic throughput for the plurality of cells when using the best candidate set;
- normalizing the amount of energy against a maximum consumption energy amount;
- normalizing the service quality level against a maximum service quality level;
- normalizing the traffic throughput against a maximum possible traffic throughput; and
- updating the previously acquired information with the normalized consumed amount of energy, the normalized service quality level, and the normalized traffic throughput.

10. Method according to any one of the claims 4-8, wherein the method further comprises the following step:
- determining a data transmission efficiency indicator for each candidate set and for each cell (108; 110; 112) of the at least one cell (108; 110; 112) based on the previously acquired information, wherein the data transmission efficiency indicator takes into account interferences and indicates how much data can be transmitted for a frequency range during a time period;
and wherein the data transmission efficiency indicator is used for determining the best candidate set.

11. Method according to claim 9, wherein the data transmission efficiency indicator is estimated based on the previously acquired information, if the data transmission efficiency indicator is not explicitly comprised by the previously acquired information.

12. Method according to any one of the preceding claims, wherein each candidate set of cell configuration parameters comprises at least one of:
- transmission times;
- transmission frequencies;
- transmission powers;
- handover related parameters;
- antenna parameters.

13. Method according to any one of the preceding claims, wherein the previously acquired information is retrieved from a database, and/or a measurement, and/or received from the at least one base station (102) of the at least one cell (108; 110; 112).

14. A network entity (400) of a digital cellular wireless telecommunication network (100), wherein the network entity (400) comprises:
- means (402) for determining current network conditions;
- means (402) for determining a current set of cell configuration parameters;
- means (402) for retrieving previously acquired information, wherein the previously acquired information indicates impacts on the network conditions when the cell configuration parameters are varied;
- means for varying the current set of cell configuration parameters using the previously acquired information, the variation being further based on the current network conditions, the variation resulting in one or more sets of cell configuration parameters;
- means (402) for determining the candidate sets of cell configuration parameters from the one or more sets of cell configuration parameters, wherein each candidate set of the one or more sets is adapted for replacing the current set.

15. A computer program product (404) comprising instructions (405) that when being executed cause a network entity (400) to perform a method according to any one of the claims 1-12.

## Patentansprüche

1. Verfahren zur Ermittlung mindestens eines Kandidatensatzes von Zellkonfigurationsparametern für mindestens eine Zelle (108; 110; 112) in einem drahtlosen digitalen zellularen Telekommunikationsnetzwerk (100), wobei das Verfahren umfasst:
- Ermitteln (S1) der aktuellen Netzwerkbedingungen;
- Ermitteln (S2) eines aktuellen Satzes von Zellkonfigurationsparametern;
- Abrufen (S3) von zuvor erfassten Informationen, wobei die zuvor erfassten Informationen Auswirkungen auf die Netzwerkbedingungen, wenn die Zellkonfigurationsparameter geändert werden, angeben;
- Ändern des aktuellen Satzes von Zellkonfigurationsparametern unter Verwendung der zuvor erfassten Informationen, wobei die Änderung weiterhin auf den aktuellen Netzwerkbedingungen basiert, wobei die Änderung zu einem oder mehreren Sätzen von Zellkonfigurationsparametern führt;
- Ermitteln (S4) des mindestens einen Kandidatensatzes von Zellkonfigurationsparametern aus dem einen oder den mehreren Sätzen von Zellkonfigurationsparametern, wobei jeder Kandidatensetz des einen oder der mehreren Kandidatensätze geeignet ist, den aktuellen Satz zu ersetzen.

2. Verfahren nach Anspruch 1, wobei das Ermitteln des mindestens einen Kandidatensatzes das Schätzen einer Änderung einer Zelllast der mindestens einen Zelle (108; 110; 112) umfasst, wobei die Änderung der Zelllast mit einer Änderung der Zellgröße der jeweiligen Zelle korreliert ist, und wobei die Korrelation zwischen der Änderung der Zelllast und der Änderung der Zellgröße auf der Basis der zuvor erfassten Informationen ermittelt wird.

3. Verfahren nach Anspruch 2, wobei eine lineare Korrelation zwischen der Änderung der Zelllast und der Änderung der Zellgröße angenommen wird, wenn die zuvor erfassten Informationen nicht ausreichen, um die Korrelation zwischen der Änderung der Zelllast und der Änderung der Zellgröße zu ermitteln.

4. Verfahren nach einem beliebigen der vorstehenden Ansprüche, wobei das Verfahren die folgenden Schritte umfasst:
- Simulieren von simulierten Netzwerkbedingungen für jeden Kandidatensatz für die mindestens eine Zelle (108; 110; 112) auf der Basis der zuvor erfassten Informationen;
- Vergleichen der simulierten Netzwerkbedingungen;
- Ermitteln eines des mindestens einen Kandidatensatzes als der beste Kandidatensatz unter Verwendung der Ergebnisse des Vergleichs; und
- Verwenden des besten Kandidatensatzes für die Telekommunikation in der mindestens einen Zelle (108; 110; 112).

5. Verfahren nach Anspruch 4, wobei das Verfahren weiterhin mindestens einen der folgenden Schritte umfasst:
- Ermitteln einer aktuellen Änderung des Zelldurchsatzes nach Verwenden des besten Kandidatensatzes für die Telekommunikation, wobei die aktuelle Änderung des Zelldurchsatzes mit einer simulierten Änderung des Zelldurchsatzes verglichen wird, und wobei die zuvor erfassten Informationen aktualisiert werden, wenn die simulierte Änderung um mehr als einen Grenzwert von der aktuellen Änderung abweicht;
- Ermitteln einer aktuellen Änderung einer Dienstgüte nach Verwenden des besten Kandidatensatzes für die Telekommunikation, wobei die aktuelle Änderung der Dienstgüte mit einer simulierten Änderung der Dienstgüte verglichen wird, und wobei die zuvor erfassten Informationen aktualisiert werden, wenn die simulierte Änderung der Dienstgüte um mehr als einen Qualitätsgrenzwert von der aktuellen Änderung der Dienstgüte abweicht;
- Ermitteln einer aktuellen Änderung einer Energiemenge nach Verwenden des besten Kandidatensatzes für die Telekommunikation, wobei die aktuelle Änderung der Energiemenge mit einer simulierten Änderung der Energiemenge verglichen wird, und wobei die zuvor erfassten Informationen aktualisiert werden, wenn die simulierte Änderung der Energiemenge um mehr als einen Energiegrenzwert von der aktuellen Änderung der Energiemenge abweicht.

6. Verfahren nach einem beliebigen der Ansprüche 4-5, wobei die aktuellen virtuellen Netzwerkbedingungen auf der Basis des aktuellen Satzes von Zellkonfigurationsparametern unter Verwendung eines Simulationsalgorithmus simuliert werden, wobei der Simulationsalgorithmus ebenfalls für die Simulation der Netzwerkbedingungen für den mindestens einen Kandidatensatz verwendet wird, und wobei der Simulationsalgorithmus angepasst wird, wenn die Simulationsergebnisse der virtuellen Netzwerkbedingungen um mehr als einen Simulationsgrenzwert von den aktuellen Netzwerkbedingungen abweichen.

7. Verfahren nach Anspruch 6, wobei das Simulieren der aktuellen virtuellen Netzwerkbedingungen das Simulieren der Verkehrslast, der Dienstgüte und/oder der Energiemenge umfasst, wobei die Verkehrslast anhand eines Verkehrslastsimulationsalgorithmus simuliert wird, wobei die Dienstgüte anhand eines Qualitätssimulationsalgorithmus simuliert wird, wobei die Energiemenge anhand eines Energieverbrauchsalgorithmus simuliert wird, wobei der Verkehrslastsimulationsalgorithmus angepasst wird, wenn die Simulationsergebnisse der Verkehrslast von einer aktuellen Verkehrslast abweichen, wobei der Qualitätssimulationsalgorithmus angepasst wird, wenn die Simulationsergebnisse der Dienstgüte von einer aktuellen Dienstgüte abweichen, und wobei der Energieverbrauchsalgorithmus angepasst wird, wenn die Simulationsergebnisse der Energiemenge von einer aktuellen Energiemenge abweichen.

8. Verfahren nach einem beliebigen der Ansprüche 4-7, wobei ermittelt wird, ob die simulierten Netzwerkbedingungen den zulässigen Netzwerkbedingungen entsprechen, wobei der Simulationsalgorithmus angepasst wird, wenn die simulierten Netzwerkbedingungen den zulässigen Netzwerkbedingungen nicht entsprechen.

9. Verfahren nach einem beliebigen der vorstehenden Ansprüche, wobei das Verfahren weiterhin mindestens einen der folgenden Schritte umfasst:
- Ermitteln einer von der Vielzahl von Zellen verbrauchten Energie, wenn der beste Kandidatensatz verwendet wird;
- Ermitteln eines Dienstgütegrads für die Vielzahl von Zellen, wenn der beste Kandidatensatz verwendet wird;
- Ermitteln eines Verkehrsdurchsatzes für die Vielzahl von Zellen, wenn der beste Kandidatensatz verwendet wird;
- Normalisieren der Energiemenge anhand einer maximalen Energieverbrauchsmenge;
- Normalisieren des Dienstgütegrads anhand eines maximalen Dienstgütegrads;
- Normalisieren der Verkehrsdurchsatzes anhand eines maximalen Verkehrsdurchsatzes; und
- Aktualisieren der zuvor erfassten Informationen mit der normalisierten Energieverbrauchsmenge, dem normalisierten Dienstgütegrad und dem normalisierten Verkehrsdurchsatz.

10. Verfahren nach einem beliebigen der Ansprüche 4-8, wobei das Verfahren weiterhin den folgenden Schritt umfasst:
- Ermitteln eines Datenübertragungseffizienzindikators für jeden Kandidatensatz und für jede Zelle (108; 110; 112) der mindestens einen Zelle (108; 110; 112) auf der Basis der zuvor erfassten Informationen, wobei der Datenübertragungseffizienzindikator Interferenzen berücksichtigt und anzeigt, welche Datenmenge für einen Frequenzbereich während einer Zeitspanne übertragen werden kann;
und wobei der Datenübertragungseffizienzindikator für die Ermittlung des besten Kandidatensatzes verwendet wird.

11. Verfahren nach Anspruch 9, wobei der Datenübertragungseffizienzindikator auf der Basis der zuvor erfassten Informationen geschätzt wird, wenn der Datenübertragungseffizienzindikator nicht eindeutig in den zuvor erfassten Informationen enthalten ist.

12. Verfahren nach einem beliebigen der vorstehenden Ansprüche, wobei jeder Kandidatensatz von Zellkonfigurationsparametern mindestens einen der folgenden Parameter umfasst:
- Übertragungszeiten;
- Übertragungsfrequenzen;
- Übertragungsleistungen;
- übergabebedingte Parameter;
- Antennenparameter.

13. Verfahren nach einem beliebigen der vorstehenden Ansprüche, wobei die zuvor erfassten Informationen aus einer Datenbank und/oder einem Messwert abgerufen und/oder von der mindestens einen Basisstation (102) der mindestens einen Zelle (108; 110; 112) empfangen werden.

14. Netzwerkentität (400) eines drahtlosen digitalen zellularen Telekommunikationsnetzwerks (100), wobei die Netzwerkentität (400) umfasst:
- Mittel (402) zum Ermitteln der aktuellen Netzwerkbedingungen;
- Mittel (402) zum Ermitteln eines aktuellen Satzes von Zellkonfigurationsparametern;
- Mittel (402) zum Abrufen der zuvor erfassten Informationen, wobei die zuvor erfassten Informationen Auswirkungen auf die Netzwerkbedingungen, wenn Zellkonfigurationsparameter geändert werden, angeben;
- Mittel zum Ändern des aktuellen Satzes von Zellkonfigurationsparametern unter Verwendung der zuvor erfassten Informationen, wobei die Änderung weiterhin auf den aktuellen Netzwerkbedingungen basiert, wobei die Änderung zu einem oder mehreren Sätzen von Zellkonfigurationsparametern führt;
- Mittel (402) zum Ermitteln der Kandidatensätze von Zellkonfigurationsparametern aus dem einen oder den mehreren Sätzen von Zellkonfigurationsparametern, wobei jeder Kandidatensatz des einen oder der mehreren Sätze für den Ersatz des aktuellen Satzes geeignet ist.

15. Computerprogramm-Produkt (404) mit Befehlen (405), welcher bei der Ausführung bewirken, dass eine Netzwerkentität (400) ein Verfahren gemäß einem beliebigen der Ansprüche 1-12 durchführt.

## Revendications

1. Procédé pour déterminer au moins un ensemble candidat de paramètres de configuration de cellule pour au moins une cellule (108 ; 110 ; 112) dans un réseau de télécommunication cellulaire numérique sans fil (100), le procédé comprenant les étapes suivantes :
- déterminer (S1) des conditions de réseau actuelles ;
- déterminer (S2) un ensemble actuel de paramètres de configuration de cellule ;
- récupérer (S3) des informations précédemment acquises, les informations précédemment acquises indiquant des impacts sur les conditions de réseau lorsque les paramètres de configuration de cellule varient ;
- varier l'ensemble actuel de paramètres de configuration de cellule en utilisant les informations précédemment acquises, la variation étant en outre basée sur les conditions de réseau actuelles, la variation ayant pour résultat un ou plusieurs ensembles de paramètres de configuration de cellule ;
- déterminer (S4) l'au moins un ensemble candidat de paramètres de configuration de cellule à partir du ou des ensembles de paramètres de configuration de cellule, chaque ensemble candidat du ou des ensembles étant adapté pour remplacer l'ensemble actuel.

2. Procédé selon la revendication 1, dans lequel la détermination de l'au moins un ensemble candidat comprend l'estimation d'un changement d'une charge de cellule de l'au moins une cellule (108 ; 110 ; 112), le changement de la charge de cellule étant en corrélation avec un changement de la taille de cellule de la cellule respective, et la corrélation entre le changement de la charge de cellule et le changement de la taille de cellule étant déterminée sur la base des informations précédemment acquises.

3. Procédé selon la revendication 2, dans lequel on suppose une corrélation linéaire entre le changement de la charge de cellule et le changement de la taille de cellule, si les informations précédemment acquises ne sont pas suffisantes pour déterminer la corrélation entre le changement de la charge de cellule et le changement de la taille de cellule.

4. Procédé selon l'une quelconque des revendications précédentes, le procédé comprenant en outre les étapes suivantes :
- simuler des conditions de réseau simulées pour chaque ensemble candidat pour l'au moins une cellule (108 ; 110 ; 112) sur la base des informations précédemment acquises ;
- comparer les conditions de réseau simulées ;
- déterminer un des ensembles candidats en tant que meilleur ensemble candidat en utilisant les résultats de la comparaison ; et
- utiliser le meilleur ensemble candidat pour la télécommunication dans l'au moins une cellule (108 ; 110 ; 112).

5. Procédé selon la revendication 4, le procédé comprenant en outre au moins une des étapes suivantes :
- déterminer un changement réel du débit de cellule après avoir utilisé le meilleur ensemble candidat pour la télécommunication, le changement réel du débit de cellule étant comparé à un changement simulé du débit de cellule, et les informations précédemment acquises étant mises à jour, si le changement simulé est différent du changement réel par plus d'une valeur seuil ;
- déterminer un changement réel d'une qualité de service après avoir utilisé le meilleur ensemble candidat pour la télécommunication, le changement réel de la qualité de service étant comparé à un changement simulé de la qualité de service, et les informations précédemment acquises étant mises à jour, si le changement simulé de la qualité de service est différent du changement réel de la qualité de service par plus d'une valeur seuil de qualité ;
- déterminer un changement réel d'une quantité d'énergie après avoir utilisé le meilleur ensemble candidat pour la télécommunication, le changement réel de la quantité d'énergie étant comparé à un changement simulé de la quantité d'énergie, et les informations précédemment acquises étant mises à jour, si le changement simulé de la quantité d'énergie est différent du changement réel de la quantité d'énergie par plus d'une valeur seuil d'énergie ;

6. Procédé selon l'une quelconque des revendications 4 et 5 dans lequel les conditions de réseau virtuelles actuelles sont simulées sur la base de l'ensemble actuel de paramètres de configuration de cellule en utilisant un algorithme de simulation, l'algorithme de simulation étant également utilisé pour simuler les conditions de réseau pour l'au moins un ensemble candidat, les résultats de simulation des conditions de réseau virtuelles actuelles étant comparées aux conditions de réseau actuelles, l'algorithme de simulation étant ajusté, si les résultats de simulation des conditions de réseau virtuelles sont différents des conditions de réseau actuelles par plus d'un seuil de simulation.

7. Procédé selon la revendication 6, dans lequel la simulation des conditions de réseau virtuelles actuelles comprennent la simulation de la charge de trafic, de la qualité de service et/ou de la quantité d'énergie, la charge de trafic étant simulée par un algorithme de simulation de la charge de trafic, la qualité de service étant simulée par un algorithme de simulation de la qualité, la quantité d'énergie étant simulée par un algorithme de consommation d'énergie, l'algorithme de simulation de la charge de trafic étant ajusté, si les résultats de simulation de la charge de trafic sont différents d'une charge de trafic actuelle, l'algorithme de simulation de la quantité étant ajusté, si les résultats de simulation de la qualité de service sont différents d'une qualité de service actuelle, et l'algorithme de consommation d'énergie étant ajusté, si les résultats de simulation de la quantité d'énergie sont différents d'une quantité d'énergie actuelle.

8. Procédé selon l'une quelconque des revendications 4 à 7, dans lequel on détermine si les conditions de réseau simulées sont conformes aux conditions de réseau autorisées, l'algorithme de simulation étant ajusté, si les conditions de réseau simulées ne sont pas conformes aux conditions de réseau simulées.

9. Procédé selon l'une quelconque des revendications précédentes, le procédé comprenant en outre au moins une des étapes suivantes :
- déterminer une quantité d'énergie consommée par la pluralité de cellules lorsque l'on utilise le meilleur ensemble candidat ;
- déterminer un niveau de qualité de service pour la pluralité de cellules lorsque l'on utilise le meilleur ensemble candidat ;
- déterminer un débit de trafic pour la pluralité de cellules lorsque l'on utilise le meilleur ensemble candidat ;
- normaliser la quantité d'énergie par rapport à une quantité d'énergie consommée maximum ;
- normaliser le niveau de qualité de service par rapport à un niveau de qualité de service maximum ;
- normaliser le débit de trafic par rapport à un débit de trafic possible maximum ; et
- mettre à jour les informations précédemment acquises avec la quantité d'énergie consommée normalisée, le niveau de qualité de service normalisé et le débit de trafic normalisé.

10. Procédé selon l'une quelconque des revendications 4 à 8, le procédé comprenant en outre l'étape suivante :
- déterminer un indicateur de l'efficacité de transmission de données pour chaque ensemble candidate et pour chaque cellule (108 ; 110 ; 112) de l'au moins une cellule (108; 110; 112) sur la base des informations précédemment acquises, l'indicateur de l'efficacité de transmission de données prenant en compte les interférences et indiquant la quantité de données pouvant être transmise pour une plage de fréquences durant une période donnée ;
et dans lequel l'indicateur de l'efficacité de transmission de données est utilisé pour déterminer le meilleur ensemble candidat.

11. Procédé selon la revendication 9, dans lequel l'indicateur de l'efficacité de transmission de données est estimé sur la base des informations précédemment acquises, si l'indicateur de l'efficacité de transmission de données n'est pas explicitement constitué par les informations précédemment acquises.

12. Procédé selon l'une quelconque des revendications précédentes, dans lequel chaque ensemble candidat de paramètres de configuration de cellule comprend au moins un élément parmi :
- des temps de transmission ;
- des fréquences de transmission ;
- des puissances de transmission ;
- des paramètres liés au transfert ;
- des paramètres d'antenne.

13. Procédé selon l'une quelconque des revendications précédentes, dans lequel les informations précédemment acquises sont récupérées à partir d'une base de données et/ou d'une mesure et/ou proviennent de l'au moins une station de base (102) de l'au moins une cellule (108 ; 110 ; 112).

14. Entité de réseau (400) d'un réseau de télécommunication cellulaire numérique sans fil (100), l'entité de réseau (400) comprenant :
- des moyens (402) pour déterminer des conditions de réseau actuelles ;
- des moyens (402) pour déterminer un ensemble actuel de paramètres de configuration de cellule ;
- des moyens (402) pour récupérer des informations précédemment acquises, les informations précédemment acquises indiquant des impacts sur les conditions de réseau lorsque les paramètres de configuration de cellule varient ;
- des moyens pour varier l'ensemble actuel de paramètres de configuration de cellule en utilisant les informations précédemment acquises, la variation étant en outre basée sur les conditions de réseau actuelles, la variation ayant pour résultat un ou plusieurs ensembles de paramètres de configuration de cellule ;
- des moyens (402) pour déterminer les ensembles candidats de paramètres de configuration de cellule à partir du ou des ensembles de paramètres de configuration de cellule, chaque ensemble candidat du ou des ensembles étant adapté pour remplacer l'ensemble actuel.

15. Produit de programme informatique (404) comprenant des instructions (405) qui, lorsqu'elles sont exécutées, entraînent l'exécution par une entité de réseau (400) d'un procédé selon l'une quelconque des revendications 1 à 12.
